# EUROPÄISCHE PATENTSCHRIFT

(11) **EP 1 254 436 B1**
(45) Veröffentlichungstag und Bekanntmachung des Hinweises auf die Patenterteilung: **03.12.2003**
(21) Anmeldenummer: 00991128.0
(22) Anmeldetag: 28.12.2000
(51) Int. Cl.: G07F 7/10

(54) **VERFAHREN ZUR NUTZERIDENTITÄTSKONTROLLE**
METHOD FOR CONTROLLING THE IDENTITY OF USERS
PROCEDE DE CONTROLE DE L'IDENTITE D'UN UTILISATEUR

(30) Priorität: 08.02.2000 DE 10005487
(43) Veröffentlichungstag der Anmeldung: 06.11.2002
(73) Patentinhaber: SIEMENS AKTIENGESELLSCHAFT, 80333 München (DE)
(72) Erfinder: PRANGE, Stefan, 81476 München (DE)
(86) Internationale Anmeldenummer: DE0004665
(87) Internationale Veröffentlichungsnummer: WO01059725

(56) Entgegenhaltungen:
- EP-A- 0 807 910
- WO-A-99/00773
- FR-A- 2 790 162
- US-A- 5 668 876

## Beschreibung

Die Erfindung betrifft ein Verfahren zur Nutzeridentitätskontrolle an einem Diensteterminal. Die Erfindung betrifft darüber hinaus ein Endgerät zur Durchführung eines solchen Verfahrens, ein Diensteterminal zur Durchführung des Verfahrens sowie ein aus einem entsprechenden Endgerät und einem entsprechenden Diensteterminal bestehendes System.

Unter dem Begriff "Diensteterminal" ist hierbei jedes Eingabe- und/oder Ausgabegerät zu verstehen, welches dazu verwendet werden kann, einen bestimmten Dienst in Anspruch zu nehmen. Es kann sich hierbei beispielsweise um Warenautomaten, Kassen in Warenhäusern, Geldautomaten, Terminals zur Zugangskontrolle, wie elektronische Schlösser an Türen, Schranken o. ä., oder auch um Terminals handeln, an denen einfach nur Informationen abgerufen oder eingegeben werden können. Dementsprechend ist unter dem Begriff "Nutzeridentitätskontrolle" im folgenden nicht nur die Feststellung der vollständigen Identität des Nutzers zu verstehen, sondern jede Kontrolle der Identität insofern und soweit, wie dies für den jeweiligen Nutzungsvorgang notwendig ist. So reicht es beispielsweise bei Zugangskontrollen aus, die Identität nur insoweit festzustellen, daß die Zugangsberechtigung des Nutzers festgestellt wird. Auch bei anderen Diensten reicht es gegebenenfalls aus, die Zugehörigkeit zu einem autorisierten Nutzerkreis festzustellen.

Bisher werden für derartige Dienste wie Zugangskontrollen oder die Bezahlung von Waren und Dienstleistungen üblicherweise Magnetstreifenkarten oder Chipkarten verwendet. Zur Erhöhung der Sicherheit ist bei einigen Nutzungsvorgängen an bestimmten Diensteterminals die Eingabe einer PIN erforderlich. Um die verschiedensten Dienste an unterschiedlichen Diensteterminals in Anspruch nehmen zu können, sind in der Regel verschiedene Magnetstreifen bzw. Chipkarten erforderlich. Dies führt dazu, daß ein Nutzer üblicherweise mehrere Karten mit sich führen muß. In der Regel ist jeder dieser Karten eine eigene PIN zugeordnet. Der Benutzer muß sich daher auch eine Vielzahl von unterschiedlichen PINs merken und diese korrekt der jeweiligen Karte zuordnen. Problematisch ist darüber hinaus, daß bei Verlust einer Karte dem Finder unter Umständen noch diverse Möglichkeiten zum Mißbrauch bleiben. So besteht die Möglichkeit, die Karte zumindest an den Diensteterminals zu verwenden, an denen keine PIN eingegeben werden muß. Beispielsweise ist in vielen Geschäften inzwischen das Bezahlen mit einer gefundenen Kredit- oder Euroscheck-Karte möglich, wenn man die Unterschrift entsprechend einübt.

Die US 5 668 876 A zeigt einen Pager, mit dem sich ein Nutzer zur Freischaltung einer Dienstleistung unter Verwendung eines Challenge-Response-Verfahrens authentisieren kann. Der vom Pager erzeugte Response-Code kann dann zur Freischaltung der Dienstleistung vom Nutzer direkt verwendet werden.

Es ist Aufgabe der vorliegenden Erfindung, eine kostengünstige, einfache und sichere Alternative zu diesem Stand der Technik zu schaffen.

Aspekte der Erfindung werden in den unabhängigen Ansprüchen 1, 14, 16 und 19 offenbart.

Die Identifizierung erfolgt hier folglich anstelle mittels einer Chip- bzw. Magnetstreifenkarte durch das Endgerät des Kunden. Bei einem solchen Endgerät kann es sich beispielsweise um ein mobiles Kommunikationsendgerät wie ein Mobiltelefon oder einen Pager handeln. Es kann sich hierbei aber auch um ein beliebiges anderes geeignetes Endgerät, wie z. B. um einen Organizer, Taschenrechner oder sogar eine Uhr oder ähnliches handeln.

Erfindungsgemäß liefert das Endgerät einen eindeutigen Zugangscode, der an das jeweilige Diensteterminal übertragen wird. Die Übermittlung dieses Codes vom Endgerät an das Dien-steterminal beim Nutzungsvorgang kann dabei auf die unterschiedlichsten Weisen erfolgen, so daß das Verfahren äußerst vielseitig an den unterschiedlichsten Diensteterminals mit den verschiedensten technischen Geräten zur Erfassung eines Zugangscodes verwendet werden kann. Das heißt, es ist zumindest bezüglich der technischen Hardware keine Standardisierung der Diensteterminals erforderlich. Mit dem erfindungsgemäßen Verfahren ist ein entsprechendes Endgerät folglich in der Lage, eine Vielzahl von Chip- oder Magnetstreifenkarten zu ersetzen.

Diese Vielzahl an einfachen Übertragungsmethoden ist daher möglich, da auch Verfahren genutzt werden können, bei denen der Code für den Nutzer und die Umgebung sichtbar gemacht wird, weil erfindungsgemäß für jeden Nutzungsvorgang ein Code erzeugt wird und anders als bei der Eingabe einer PIN am Diensteterminal nicht immer derselbe Code verwendet wird.

Im einfachsten Fall weist das Endgerät beispielsweise ein Display auf, auf dem der Code ausgegeben wird. Dieser Code kann vom Nutzer oder auch dem Bedienpersonal eines Diensteterminals abgelesen und am Diensteterminal eingegeben werden. Alternativ ist selbstverständlich auch eine Nutzung von Sprachein- bzw. -ausgabegeräten möglich.

Bei einer bevorzugten Ausführungsform wird der Code jedoch jeweils mittels einer Schnittstelle direkt vom Endgerät an das Diensteterminal übermittelt. Hierbei kann es sich insbesondere um kurzreichweitige Schnittstellen, wie Infrarot-Schnittstellen (IrDA), Bluetooth (kurzreichweitige Funkschnittstellen), oder auch Schnittstellen handeln, die mit einer akustischen Tonfolge als Code arbeiten. Selbstverständlich können aber auch langreichweitige Übertragungsmethoden, beispielsweise SMS im GSM-Mobilfunknetz, verwendet werden.

Bei einem besonders bevorzugten Ausführungsbeispiel erfolgt die Codeübertragung unter Nutzung einer Displayeinrichtung des Endgeräts, wobei der Code von einer entsprechenden Leseeinrichtung des Diensteterminals von der Displayeinrichtung abgelesen wird. Hierbei wird beispielsweise auf dem Display ein Codemuster, wie z. B. ein Balkencode, oder auch ein alphanumerischer Code sichtbar dargestellt. Über einen Scanner als Leseeinrichtung kann das Diensteterminal diesen Code ablesen. Besondere Vorteile bietet dieses System beim Bezahlen an Warenhauskassen. Viele Warenhauskassen weisen ohnehin einen Laserscanner zum Lesen der Balkencodes an den Waren auf. Dieser Scanner kann gleichzeitig dazu verwendet werden, um zum Bezahlvorgang einen entsprechenden Bezahl- bzw. Identifizierungscode auf dem Display des Endgeräts des Kunden abzulesen.

Eine weitere Alternative besteht darin, daß die Displaybeleuchtung des Endgeräts dazu eingesetzt wird, den Code zu übertragen. Hierbei kann der Code beispielsweise aus einer Sequenz von aufeinanderfolgenden verschiedenen Helligkeitsstufen der Displaybeleuchtung bestehen. Das heißt, der Code kann z. B. aus einer bestimmten Abfolge und Zeitdauer von Ein- und Aus-Zuständen der Displaybeleuchtung generiert werden. Zum Lesen einer solchen Folge muß die Leseeinrichtung des Diensteterminals im einfachsten Fall lediglich einen Photosensor aufweisen.

Selbstverständlich kann auch eine Kombination der verschiedensten Codes und Übertragungsmethoden verwendet werden. Da der Code für jeden Nutzungsvorgang neu ausgegeben wird, d. h. nur in der jeweiligen Transaktion benutzt wird, ist bei jeder Übertragungsmethode eine recht hohe Sicherheit gegeben.

Im Prinzip kann ein Code auch mehrfach benutzt werden. Das heißt, daß beispielsweise aus einer großen Anzahl von unterschiedlichen zu einem Nutzer gehörigen Codes zufällig für einen Nutzungsvorgang ein bestimmter Code ausgewählt wird. Auch bei dieser Ausführungsform wäre schon eine relativ große Sicherheit gegeben, wenn der Bestand an Codes groß genug gewählt wird.

Vorzugsweise ist der Code jedoch ein eindeutig dem jeweiligen Nutzungsvorgang zugeordneter Code, welcher speziell für den Nutzungsvorgang generiert und nur einmal verwendet wird.

Bei einer besonders vorteilhaften Ausführungsform wird der Code unter Verwendung eines dem Nutzungsvorgang und/oder dem Diensteterminal zugeordneten Parameters generiert. Ein solcher Parameter ist beispielsweise das Datum, die Uhrzeit, bei einem Bezahlvorgang der Betrag, der Ort der Nutzung, z. B. der Name oder eine Kennummer eines Geschäftes, oder eine Nummer des Diensteterminals. Diese Parameter können, wie beispielsweise das Datum oder die Uhrzeit, automatisch durch eine im Endgerät befindliche Uhr generiert werden. Andere Parameter wie Betrag oder Terminalnummer können beispielsweise auch von Hand durch den Benutzer in das Endgerät eingegeben werden. Der Ort läßt sich beispielsweise durch eine Lokalisierungseinrichtung des Geräts, wie z. B. durch ein auf GPS oder einem Funknetz basierenden Ortungssystem, auch automatisch feststellen.

Bei einer weiteren vorteilhaften Ausführungsform wird der Code unter Verwendung eines eindeutig dem Nutzer bzw. dem Endgerät zugeordneten Parameters generiert. Hierbei kann es sich um eine Kundenidentitätsnummer, eine Telefonnummer oder eine Kreditkartennummer des Nutzers handeln. Insbesondere kann es sich hierbei auch um eine PIN handeln, das heißt, es wird nur dann ein Zugangscode ausgegeben, wenn die richtige PIN eingegeben wird. In diesem Fall wäre die gleiche Sicherheit gegeben wie bei der Benutzung von Kreditkarten mit einer PIN, die am Diensteterminal eingegeben wird. Jedoch hat dieses Verfahren den Vorteil, daß sich der Benutzer nur eine PIN merken muß und mit dieser PIN die verschiedensten Zugangscodes für die unterschiedlichsten Dienste bzw. Diensteterminals erzeugen kann.

Für hohe Sicherheitsstufen können als Parameter auch biometrische Daten des Nutzers, beispielsweise ein Fingerabdruckmuster oder dergleichen, verwendet werden. Hierzu muß das Endgerät lediglich eine entsprechende Einrichtung zum Einlesen der biometrischen Daten aufweisen. Bei der Codegenerierung können die genannten Parameter entweder direkt als Ausgangsparameter verwendet werden, aus denen der Code generiert wird. Es ist aber auch möglich, daß die Parameter nicht direkt in den Code selbst eingehen, sondern lediglich insoweit verwendet werden, als daß ihre Richtigkeit geprüft wird und erst dann ein Code generiert wird. Es ist selbstverständlich auch eine beliebige Kombination der verschiedenen Parameter möglich.

Die Generierung des Codes für das Endgerät kann z. B. im Endgerät selbst in einer entsprechenden Codegenerierungseinrichtung erfolgen. Diese interne Codegenerierungseinrichtung kann sich aber auch auf einer SIM-Karte o. ä. auswechselbarem Modul im Endgerät befinden.

Die Codegenerierung kann jedoch auch in einer externen Codegenerierungseinrichtung, beispielsweise eines zentralen Anbieters im Netz, erfolgen. Es ist auch eine teilweise Generierung des Codes in einer zentralen Einrichtung im Netz und im Gerät bzw. auf einer SIM-Karte oder dergleichen möglich. Das heißt, der Algorithmus zur Erzeugung des Codes befindet sich teilweise im Endgerät und teilweise im Netz. Hierdurch sind beliebig hohe Sicherheitsstufen erreichbar.

Die Erzeugung des Codes in einer externen Codegenerierungseinrichtung erfolgt vorzugsweise durch ein Anforderungssignal, welches vom Endgerät an die Codegenerierungseinrichtung gesendet wird. Dies kann beispielsweise bei einem Mobiltelefon über SMS erfolgen. Dieses Anforderungssignal kann u. a. die genannten dem Diensteterminal, dem Nutzungsvorgang, dem Nutzer oder dem Endgerät zugeordneten Parameter enthalten.

Ebenso kann für das Diensteterminal ein Code erzeugt werden, der dazu benutzt wird, den Code des Endgeräts zu entschlüsseln oder in anderer geeigneter Weise zu verifizieren. Eine einfache Möglichkeit besteht darin, daß beide Codes identisch sind und ein Vergleich der Codes stattfindet. Nur bei Übereinstimmung der Codes wird dann die Transaktion durchgeführt.

Vorzugsweise wird der Code jedoch mit einem asymmetrischen Verschlüsselungsverfahren erzeugt. Das heißt, der Schlüssel des Endgeräts zum Erzeugen des Codes und der Schlüssel des Diensteterminals, um den Code zu entschlüsseln oder zu verifizieren und den Nutzer bzw. das Endgerät zu identifizieren, sind unterschiedlich.

Der Code kann dabei von einer im Diensteterminal befindlichen Codegenerierungseinrichtung oder einer externen Codegenerierungseinrichtung, beispielsweise einer Codegenerierungseinrichtung in einem Netz von mehreren Diensteterminals, generiert werden. Es kann sich hierbei insbesondere auch um die gleiche Codegenerierungseinrichtung handeln, die auch den Code für das Endgerät erzeugt. In diesem Fall würde aufgrund des Anforderungssignals in der Codegenerierungseinrichtung ein Code erzeugt und an das Endgerät und an das Diensteterminal versendet.

Bei einem weiteren bevorzugten Ausführungsbeispiel werden die Codes separat, d. h. der Code für das Endgerät des Nutzers vom Endgerät selbst und der Code für das Diensteterminal von der internen oder externen Codegenerierungseinrichtung generiert. In diesem Fall kann beispielsweise gleichzeitig mit der Generierung des Codes im Endgerät ein entsprechendes Anforderungssignal an die Codegenerierungseinrichtung erfolgen, woraufhin der Code für das Diensteterminal erzeugt wird.

Bei einer weiteren bevorzugten Ausführungsform wird der Code für das Endgerät oder der Code für das Diensteterminal bzw. beide Codes jeweils in einem rekursiven Verfahren unter Verwendung des bei dem vorherigen Nutzungsvorgang verwendeten Codes generiert. Bei dem rekursiven Verfahren handelt es sich vorzugsweise um einen geheimen Algorithmus, um einen möglichst hohen Sicherheitsstandard zu erreichen. Es ist auch möglich, daß der Code nur teilweise unter Verwendung eines rekursiven Verfahrens erzeugt wird. Das heißt, es wird quasi ein Grundcode rekursiv erzeugt und zur Erzeugung des endgültigen Zugangscodes werden dann weitere Parameter, beispielsweise die dem Nutzungsvorgang zugeordneten Parameter wie Datum, Uhrzeit, Betrag, Ort oder die dem Endgerät bzw. dem Nutzer zugeordneten Parameter wie PIN, hinzugefügt und daraus der Gesamtcode generiert.

Bei einem rekursiven Verfahren zur Erzeugung des Codes für das Diensteterminal und einer separaten Erzeugung des Codes für das Endgerät kann das Anforderungssignal zur Erzeugung eines Codes für das Diensteterminal auch implizit mit der Übersendung des Codes an das Diensteterminal bei dem vorherigen Nutzungsvorgang erfolgen. Das heißt, bei Übersendung des Codes bei einem Nutzungsvorgang wird automatisch gleich vom Diensteterminal bzw. von der externen Codegenerierungseinrichtung des Diensteterminals ein neuer Code für den nächsten Nutzungsvorgang erzeugt und in einem Speicher abgelegt.

Die Codegenerierungseinrichtung bzw. die Einrichtung zur Generierung des Anforderungssignals kann vorzugsweise eine entsprechend eingerichtete Prozessoreinrichtung sein, wobei die Prozessoreinrichtung beispielsweise aus einem oder mehreren Mikrocontrollern sowie verschiedenen internen oder externen Speichern besteht.

Die interne Codegenerierungseinrichtung bzw. Prozessoreinrichtung kann entweder fest im Endgerät angeordnet sein. Es kann sich hierbei aber auch um ein austauschbares Modul, beispielsweise um eine Prozessoreinrichtung auf einer SIM-Karte, handeln. Insbesondere ist es auch möglich, daß die Einrichtung mehrteilig ist, wobei sich ein Teil fest im Gerät befindet und ein anderer Teil auf dem auswechselbaren Modul.

Die Einrichtung zum Übermitteln eines Codes an das Diensteterminal kann im weitesten Sinne auch ein Display oder ein Lautsprecher sein, an dem der Code für den Nutzer ausgegeben wird.

Je nach oben beschriebenen Verfahren wird entweder direkt der von der Codegenerierungseinrichtung des Endgeräts bzw. der von der externen Codegenerierungseinrichtung aufgrund des Anforderungssignals empfangene Code an das Diensteterminal übermittelt. Es ist aber beispielsweise auch möglich, daß ein von der Codegenerierungseinrichtung aufgrund des Anforderungssignals empfangener Code zunächst in der internen Codegenerierungseinrichtung weitercodiert wird und dieser Code dann an das Diensteterminal übermittelt wird.

Bei einer besonders bevorzugten Ausführungsform weist die Einrichtung zur Erfassung des Codes vom Endgerät eine Schnittstelle zur direkten Übermittlung des Codes vom Endgerät zum Diensteterminal auf. Das heißt, es erfolgt eine Erfassung des Codes, ohne daß der Nutzer den Code beispielsweise am Endgerät ablesen muß und am Diensteterminal wieder eingeben muß.

Die Erfindung wird im folgenden unter Hinweis auf die beigefügten Zeichnungen anhand von Ausführungsbeispielen näher erläutert. Die dort dargestellten Merkmale und auch die bereits oben beschriebenen Merkmale können nicht nur in den genannten Kombinationen, sondern auch einzeln oder in anderen Kombinationen erfindungswesentlich sein. Insbesondere wird an dieser Stelle noch darauf hingewiesen, daß alle in der gesamten Beschreibung und in den Ansprüchen bezüglich des Verfahrens beschriebenen Merkmale auch bezüglich der Geräte bzw. des Systems zur Durchführung des Verfahrens erfindungswesentlich sein können und umgekehrt. Es zeigen:
Figur 1 eine schematische Darstellung eines Endgeräts bei Nutzung an einem Diensteterminal unter Verwendung des erfindungsgemäßen Verfahrens mit Darstellung der wesentlichen Signalverläufe;
Figur 2 eine schematische Frontansicht eines erfindungsgemäßen Endgeräts mit Darstellung des erzeugten Codes auf dem Display;
Figur 3 eine schematische Seitenansicht des Endgeräts gemäß Figur 2 beim Ablesen des Codes vom Display durch eine Leseeinrichtung des Diensteterminals.

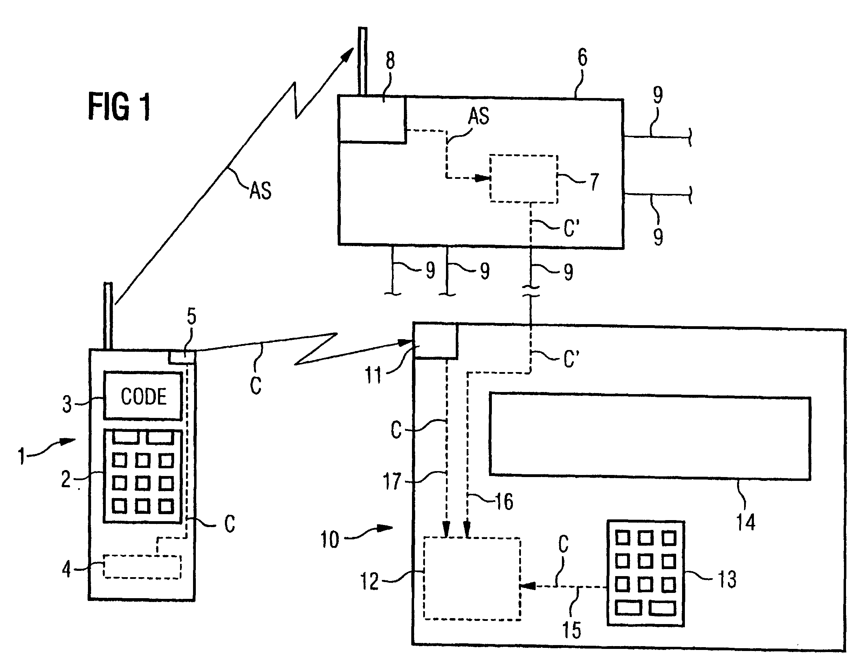

Bei dem in Figur 1 dargestellten Ausführungsbeispiel des erfindungsgemäßen Verfahrens wird als Endgerät 1 ein Mobiltelefon 1 verwendet. Dieses Mobiltelefon 1 weist neben den üblichen Bestandteilen, wie beispielsweise eine Tastatur 2 und ein Display 3, eine interne Codegenerierungseinrichtung 4 auf. Diese Codegenerierungseinrichtung 4 kann auch innerhalb der ohnehin im Mobiltelefon 1 befindlichen Prozessoreinrichtung realisiert sein. Weiterhin weist das Mobiltelefon 1 eine kurzreichweitige Funkschnittstelle 5 auf.

Bei dem Diensteterminal handelt es sich im vorliegenden Ausführungsbeispiel um eine Kasse in einem Warenhaus. Dieses Diensteterminal 10 weist eine entsprechende Schnittstelle 11 zum Empfang eines Codes C von der Schnittstelle 5 des Mobiltelefons 1 auf.

Weiterhin weist das Diensteterminal eine Tastatur 13, ein Display 14 und eine Einrichtung 12 zur Verifizierung des vom Mobiltelefon 1 empfangenen Codes C auf. Die Einrichtung 12 zur Verifizierung des Codes ist über entsprechende Leitungen 15, 17 mit der Tastatur 13 und mit der Schnittstelle 11 verbunden. Außerdem ist das Diensteterminal 10 bzw. die Einrichtung 12 zur Verifizierung des Codes über die Leitungen 16 bzw. 9 an eine externe Codegenerierungseinrichtung 7 angeschlossen.

Diese Codegenerierungseinrichtung 7 befindet sich bei dem dargestellten Ausführungsbeispiel in einem zentralen Rechner 6 eines Netzes, an dem mehrere Diensteterminals (nicht dargestellt) über weitere Datenleitungen 9 angeschlossen sind. Anstelle der Datenleitungen 9 ist selbstverständlich auch eine drahtlose Vernetzung möglich. Ebenso braucht es sich bei dem Rechner 6 nicht um einen speziellen zentralen Rechner nur für diese Diensteterminals handeln, sondern es kann sich auch um einen zentralen Rechner in einem allgemein zugänglichen Netz handeln, an dem auch andere Geräte angeschlossen sind bzw. mit dem andere Geräte in Verbindung stehen, beispielsweise um einen Rechner im Internet. Der in Figur 1 dargestellte Rechner weist außerdem eine Empfangseinheit 8 auf, welche mit der Codegenerierungseinrichtung 7 verbunden ist.

Die Bezahlung mittels des Mobiltelefons 1 an dem Diensteterminal 10 erfolgt bei dem dargestellten Ausführungsbeispiel wie folgt:

Aus einer über die Tastatur 2 eingegebenen Nummer für das Diensteterminal 10, einer persönlichen Kundennummer und dem zu bezahlenden Betrag sowie zusätzlich dem von der Prozessoreinrichtung des Mobiltelefons 1 automatisch ermittelten Datum und der Uhrzeit, wird unter Verwendung einer ebenfalls über die Tastatur einzugebenen PIN in der Codegenerierungseinrichtung 4 ein Code C erzeugt. Der Betrag kann hierbei beispielsweise einfach von einem Display 14 des Diensteterminals abgelesen werden.

Gleichzeitig wird ein Anforderungssignal AS über einen SMS-Kanal des Mobilfunknetzes direkt an die Empfangseinrichtung 8 des zentralen Rechners 6 übermittelt. Dieses Anforderungssignal AS wird an die Codegenerierungseinrichtung 7 weitergeleitet. Das Anforderungssignal AS enthält u. a. die von der Codegenerierungseinrichtung 4 des Mobiltelefons 1 für die Generierung des Codes genutzten Daten. In der Codegenerierungseinrichtung 7 wird daraufhin parallel ein Code C' erzeugt, welcher an das Diensteterminal 10 übermittelt wird. Über die Datenleitung 9,16 gelangt dieser Code C' zur Einrichtung 12 zur Verifizierung des vom Mobiltelefon 1 erzeugten Codes C.

Zur Übermittlung des Codes C von dem Mobiltelefon 1 zum Diensteterminal 10 bestehen verschiedene Möglichkeiten.

Zum einen kann eine direkte Übermittlung über die drahtlosen Funkschnittstellen 5, 11 erfolgen. Weiterhin ist es möglich, daß der Code C in alphanumerischer Form auf dem Display 3 des Mobiltelefons 1 dargestellt wird. Dieser Code C kann dann vom Nutzer oder einer das Diensteterminal 10 bedienenden Person über die Tastatur 13 in das Diensteterminal 10 eingegeben werden.

Je nach Eingabeart gelangt der Code C über die Leitungen 15 oder 17 zur Einrichtung 12 zur Verifizierung des Codes C. Hier wird der Code C entweder mit Hilfe des Codes C' entschlüsselt und so verifiziert oder bei Erzeugung eines identischen Codes C,C' für das Mobiltelefon 1 und das Diensteterminal 10 einfach verglichen. Das Diensteterminal 10 kann zusätzlich aufgrund des eingegebenen Codes C als Quittungscode eine Rechnung erzeugen, die dann noch vom Kunden, wie bei den bisherigen Zahlungsmethoden mit einer EC-Karte, unterschrieben wird.

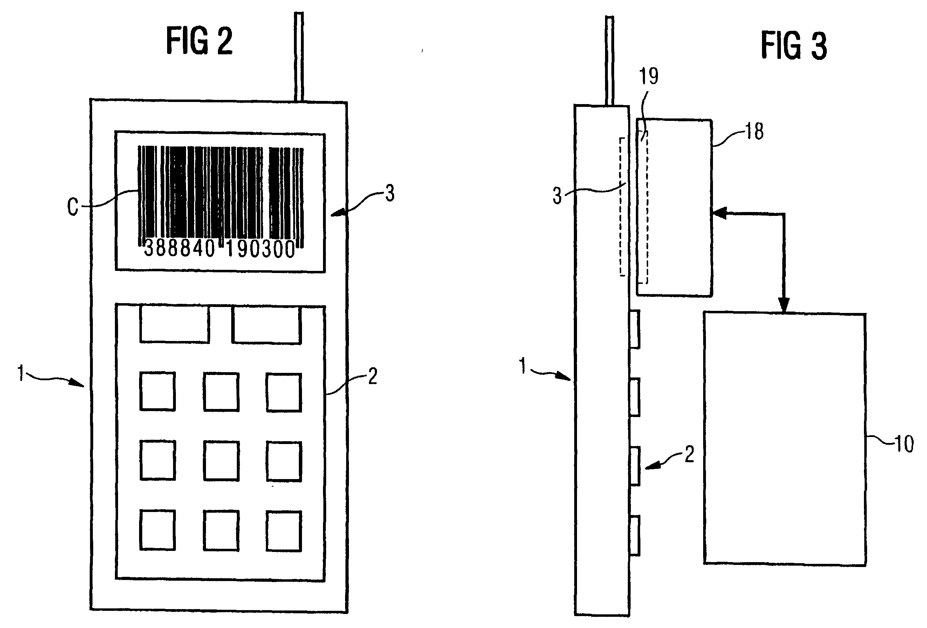

Die Figuren 2 und 3 zeigen eine alternative Methode zur Übergabe des Codes C. Hierbei wird auf dem Display 3 des Mobiltelefons 1 ein Codemuster, im vorliegenden Beispiel ein Muster, bestehend aus einem Balkencode C und einem darunter angeordneten alphanumerischen Code, erzeugt. Dieser Balkencode C wird dann über eine Leseeinrichtung 18 gelesen, indem das Mobiltelefon 1 mit dem Display 3 auf ein Scannerfenster 19 der Leseeinrichtung 18 des Diensteterminals 10 aufgelegt wird.

Die Leseeinrichtung 18 kann hierbei in das Diensteterminal 10 integriert sein. Es kann sich aber auch, wie dargestellt, um eine externe Leseeinrichtung 18 handeln, die durch eine entsprechende Leitung oder über eine drahtlose Verbindung mit dem Diensteterminal 10 kommuniziert. Im einfachsten Fall handelt es sich bei der Leseeinrichtung 18 beispielsweise um einen Laserscanner, welcher sich ohnehin am Diensteterminal 10 befindet, um Balkencodes auf Waren oder dergleichen einzulesen.

Wie die Beispiele zeigen, ist das erfindungsgemäße Verfahren äußerst universell und mit heute verfügbaren Endgeräten und Diensteterminals realisierbar, ohne daß aufwendige technische Änderungen oder neue Komponenten hinzugefügt werden müssen. Es sind lediglich Änderungen in den Steuerungen der jeweiligen Geräte erforderlich, wobei die verschiedenen Applikationen, beispielsweise bei Mobiltelefonen oder ähnlichen Geräten, auch auf entsprechenden SIM-Karten oder in anderen Modulen realisiert werden können.

Je nach Aufwand sind die verschiedensten Sicherheitsstufen erreichbar, indem zur Erzeugung des Codes verschiedene Parameter verwendet werden, welche eindeutig mit der Person des Nutzers oder mit dem Diensteterminal zusammenhängen. Weiterhin können beispielsweise über SMS vom Diensteterminal oder vom jeweiligen Endgerät zur Erhöhung der Sicherheit zusätzliche Nummern übermittelt werden, welche ebenfalls in die Generierung der Codes, d. h. zur Verschlüsselung bzw. auch zur Entschlüsselung, einfließen.

Die Algorithmen zur Erzeugung der Codes können beliebig kompliziert sein und können auf verschiedene Einrichtungen verteilt sein, so daß auch auf diese Weise die Sicherheit erhöht werden kann.

Da der Code für jede Transaktion nur einmal genutzt wird, muß hierbei an der kritischsten Stelle, nämlich bei der Übermittlung des Codes vom Endgerät an das Diensteterminal, welche in der Regel in der Anwesenheit von weiteren Personen, wie dem Bedienpersonal des Diensteterminals oder anderen Kunden, stattfindet, der Code nicht besonders geschützt werden.

Das Verfahren ersetzt somit auch aufwendige TAN-Listen und eignet sich insbesondere auch gut für die Bezahlung von Waren und Dienstleistungen per Internet. In diesem Fall wäre dann das Diensteterminal beispielsweise der eigene Computer des Nutzers. Die Codegenerierungseinrichtung befindet sich dabei beispielsweise in einem Server des Diensteanbieters. Zur Durchführung einer Transaktion mit dem Diensteterminal, beispielsweise beim Homebanking, kann der Nutzer wie bisher seine private Zugangsnummer nutzen und zusätzlich für jede Transaktion eine über das Endgerät erzeugte und ausgegebene Zugangsnummer verwenden, welche einmalig für die jeweilige Transaktion herausgegeben wird und damit die bisherige TAN ersetzt.

## Patentansprüche

1. Verfahren zur Nutzeridentitätskontrolle an einem Diensteterminal (10), bei dem unter Verwendung eines Endgeräts (1) des Nutzers und/oder ansprechend auf ein Anforderungssignal (AS) des Endgeräts (1) ein Code (C) für das Endgerät (1) generiert und dieser Code (C) vom Endgerät (1) zur Entschlüsselung und/oder Verifizierung an das Diensteterminal (10) übermittelt wird,
**dadurch gekennzeichnet,**
**daß** der Code (C) jeweils ganz oder teilweise in einem rekursiven Verfahren unter Verwendung des bei dem vorherigen Nutzungsvorgangs verwendeten Codes generiert wird.

2. Verfahren nach Anspruch 1, **dadurch gekennzeichnet, daß** der Code (C) ein eindeutig dem jeweiligen Nutzungsvorgang zugeordneter Code (C) ist.

3. Verfahren nach Anspruch 1 oder 2, **dadurch gekennzeichnet, daß** für das Diensteterminal (10) ein Code (C') generiert wird und das Diensteterminal (10) unter Verwendung dieses Codes (C') den vom Endgerät (1) empfangenen Code (C) entschlüsselt und/oder verifiziert.

4. Verfahren nach einem der Ansprüche 1 bis 3, **dadurch gekennzeichnet, daß** vom Endgerät (1) des Nutzers ein Anforderungssignal (AS) an eine Codegenerierungseinrichtung (7) gesendet wird und daraufhin von der Codegenerierungseinrichtung (7) der Code (C') generiert und an das Diensteterminal (10) übermittelt wird.

5. Verfahren nach Anspruch 4, **dadurch gekennzeichnet, daß** der von der Codegenerierungseinrichtung generierte Code als Code für das Endgerät an das Endgerät übermittelt wird.

6. Verfahren nach einem der Ansprüche 1 bis 4, **dadurch gekennzeichnet, daß** die Codes (C, C') separat von dem Endgerät (1) des Nutzers und der Codegenerierungseinrichtung (7) generiert werden.

7. Verfahren nach einem der Ansprüche 1 bis 6, **dadurch gekennzeichnet, daß** der Code (C') jeweils ganz oder teilweise in einem rekursiven Verfahren unter Verwendung des bei dem vorherigen Nutzungsvorgangs verwendeten Codes generiert wird.

8. Verfahren nach einem der vorstehenden Ansprüche, **dadurch gekennzeichnet, daß** der Code (C, C') unter Verwendung eines dem Nutzungsvorgang und/oder dem Diensteterminal (10) zugeordneten Parameters generiert wird.

9. Verfahren nach einem der vorstehenden Ansprüche, **dadurch gekennzeichnet, daß** der Code (C, C') unter Verwendung eines dem Nutzer und/oder dem Endgerät(1) zugeordneten Parameters generiert wird.

10. Verfahren nach einem der Ansprüche 4 bis 9, **dadurch gekennzeichnet, daß** das Anforderungssignal (AS ) den dem Nutzer und/oder dem Endgerät (1) und/oder dem Nutzungsvorgang und/oder dem Diensteterminal (10) zugeordneten Parameter umfaßt.

11. Verfahren nach einem der vorstehenden Ansprüche, **dadurch gekennzeichnet, daß** der Code (C) mittels einer Schnittstelle (5, 11) direkt vom Endgerät (1) an das Diensteterminal (10) übermittelt wird.

12. Verfahren nach einem der vorstehenden Ansprüche, **dadurch gekennzeichnet, daß** der Code (C) unter Nutzung einer Displayeinrichtung (3) des Endgeräts (1) an das Diensteterminal (10) übermittelt wird.

13. Verfahren nach Anspruch 12, **dadurch gekennzeichnet, daß** der Code (C) von einer Leseeinrichtung (18) des Diensteterminals (10) von der Displayeinrichtung (3) des Endgeräts (1) gelesen wird.

14. Endgerät (1) zur Durchführung eines Verfahrens nach einem der Ansprüche 1 bis 13,
mit einer Codegenerierungseinrichtung (4)
und/oder mit einer Einrichtung zur Generierung eines Anforderungssignals (AS) zur Anforderung eines Codes (C) für das Endgerät (1) und Mitteln zur Versendung des Anforderungssignals (AS) an eine Codegenerierungseinrichtung (7) und Mitteln zum Empfang des Codes von der Codegenerierungseinrichtung (7) und mit einer Einrichtung (3, 5) zum Übermitteln eines Codes (C) an ein Diensteterminal (10),
**dadurch gekennzeichnet, dass** die Codegenerierungseinrichtung den Code (C) jeweils ganz oder teilweise in einem rekursiven Verfahren unter Verwendung des bei dem vorherigen Nutzungsvorgangs verwendeten Codes generiert.

15. Endgerät nach Anspruch 14, **dadurch gekennzeichnet, daß** das Endgerät (1) ein Mobiltelefon (1) ist.

16. Diensteterminal (10) zur Durchführung eines Verfahrens
nach einem der Ansprüche 1 bis 13,
mit einer internen oder externen Codegenerierungseinrichtung (7), welche einen Code (C') für das Diensteterminal (10) erzeugt,
und mit einer Einrichtung zur Erfassung eines Codes (C) von einem Endgerät (1) eines Nutzers
und mit einer Einrichtung zur Verifizierung des erfaßten Codes (C) des Endgeräts (1) unter Verwendung des von der Codegenerierungseinrichtung (7) erzeugten Codes (C'),
**dadurch gekennzeichnet, dass** die Codegenerierungseinrichtung den Code (C) jeweils ganz oder teilweise in einem rekursiven Verfahren unter Verwendung des bei dem vorherigen Nutzungsvorgangs verwendeten Codes generiert.

17. Diensteterminal nach Anspruch 16, **dadurch gekennzeichnet, daß** die Einrichtung zur Erfassung des Codes (C) eine Schnittstelle (11) zur direkten Ubermittlung des Codes (C) vom Endgerät (1) zum Diensteterminal (10) aufweist.

18. Diensteterminal nach Anspruch 16 oder 17, **dadurch gekennzeichnet, daß** die Einrichtung zur Erfassung des Codes (C) eine Leseeinrichtung (18) zum Lesen des Codes (C) von einer Displayeinrichtung (3) des Endgeräts (1) aufweist.

19. System zur Durchführung eines Verfahrens nach einem der Ansprüche 1 bis 13, mit einem Endgerät (1) gemäß Anspruch 14 oder 15 und einem Diensteterminal (10) gemäß Anspruch 16, 17 oder 18.

## Claims

1. Method for user identity control on a service terminal (10), in which, using a station (1) associated with the user and/or in response to a request signal (AS) from the station (1), a code (C) is generated for the station (1) and this code (C) is transmitted from the station (1) to the service terminal (10) for the purpose of decryption and/or verification,
**characterized**
**in that** the code (C) is respectively generated fully or in part in a recursive method using the code used for the previous use action.

2. Method according to Claim 1, **characterized in that** the code (C) is a code (C) which is explicitly associated with the respective use action.

3. Method according to Claim 1 or 2, **characterized in that** a code (C') is generated for the service terminal (10), and the service terminal (10) uses this code (C') to decrypt and/or verify the code (C) received from the station (1).

4. Method according to one of Claims 1 to 3,
**characterized in that** the user's station (1) sends a request signal (AS) to a code generation device (7), and the code generation device (7) then generates the code (C') and transmits it to the service terminal (10).

5. Method according to Claim 4, **characterized in that** the code generated by the code generation device is transmitted to the station as code for the station.

6. Method according to one of claims 1 to 4,
**characterized in that** the codes (C, C') are generated separately by the user's station (1) and by the code generation device (7).

7. Method according to one of Claims 1 to 6,
**characterized in that** the code (C') is respectively generated fully or in part in a recursive method using the code used for the previous use action.

8. Method according to one of the preceding claims,
**characterized in that** the code (C, C') is generated using a parameter associated with the use action and/or with the service terminal (10).

9. Method according to one of the preceding claims,
**characterized in that** the code (C, C') is generated using a parameter associated with the user and/or with the station (1).

10. Method according to one of Claims 4 to 9,
**characterized in that** the request signal (AS) comprises the parameter associated with the user and/or with the station (1) and/or with the use action and/or with the service terminal (10).

11. Method according to one of the preceding claims,
**characterized in that** the code (C) is transmitted directly from the station (1) to the service terminal (10) using an interface (5, 11).

12. Method according to one of the preceding claims,
**characterized in that** the code (C) is transmitted to the service terminal (10) using a display device (3) on the station (1).

13. Method according to Claim 12, **characterized in that** the code (C) is read from the display device (3) on the station (1) by a reading device (18) on the service terminal (10).

14. Station (1) for carrying out a method according to one of Claims 1 to 13,
having a code generation device (4)
and/or having a device for generating a request signal (AS) for requesting a code (C) for the station (1) and means for sending the request signal (AS) to a code generation device (7) and means for receiving the code from the code generation device (7)
and having a device (3, 5) for transmitting a code (C) to a service terminal (10),
**characterized in that** the code generation device respectively generates the code (C) fully or in part in a recursive method using the code used for the previous use action.

15. Station according to Claim 14, **characterized in that** the station (1) is a mobile telephone (1).

16. Service terminal (10) for carrying out a method according to one of Claims 1 to 13,
having an internal or external code generation device (7) which produces a code (C') for the service terminal (10) ,
and having a device for detecting a code (C) from a station (1) associated with a user
and having a device for verifying the detected code (C) from the station (1) using the code (C') produced by the code generation device (7),
**characterized in that** the code generation device respectively generates the code (C) fully or in part in a recursive method using the code used for the previous use action.

17. Service terminal according to Claim 16,
**characterized in that** the device for detecting the code (C) has an interface (11) for directly transmitting the code (C) from the station (1) to the service terminal (10).

18. Service terminal according to Claim 16 or 17,
**characterized in that** the device for detecting the code (C) has a reading device (18) for reading the code (C) from a display device (3) on the station (1).

19. System for carrying out a method according to one of Claims 1 to 13, having a station (1) according to Claim 14 or 15 and having a service terminal (10) according to Claim 16, 17 or 18.

## Revendications

1. Procédé de contrôle de l'identité de l'utilisateur sur un terminal de service (10), dans lequel grâce à l'utilisation d'un terminal (1) de l'utilisateur et/ou en réponse à un signal d'invocation (AS) du terminal (1), un code (C) est généré pour le terminal (1) et ce code (C) est transmis par le terminal (1) vers le terminal de service (10) pour être décodé/ou vérifié,
**caractérisé en ce que**
le code (C) est respectivement généré soit totalement ou partiellement au cours d'un procédé récursif, en utilisant le code ayant servi lors de l'utilisation précédente.

2. Procédé selon la revendication 1,
**caractérisé en ce que**
le code (C) est un code (C) explicitement affecté au processus d'utilisation en cours.

3. Procédé selon l'une quelconque des revendications 1 ou 2,
**caractérisé en ce que**
pour le terminal de service (10), un code (C') est généré et en utilisant ledit code (C'), le terminal de service décode et/ou vérifie le code (C) reçu à partir du terminal (1).

4. Procédé selon l'une quelconque des revendications 1 à 3,
**caractérisé en ce que**
un signal d'invocation (AS) est envoyé par le terminal (1) de l'utilisateur vers un dispositif de génération de code (7), suite à quoi le code (C') est généré par le dispositif de génération de code (7), puis transmis au terminal de service (10).

5. Procédé selon la revendication 4,
**caractérisé en ce que**
le code généré par le dispositif de génération de code est transmis au terminal, en qualité de code destiné au terminal.

6. Procédé selon l'une quelconque des revendications 1 à 4,
**caractérisé en ce que**
les codes (C, C') sont générés séparément par le terminal (1) de l'utilisateur et par le dispositif de génération de code (7).

7. Procédé selon l'une quelconque des revendications 1 à 6,
**caractérisé en ce que**
le code (C') est respectivement généré soit totalement ou partiellement au cours d'un procédé récursif, en utilisant le code ayant servi lors de la dernière utilisation.

8. Procédé selon l'une quelconque des revendications précédentes,
**caractérisé en ce que**
le code (C, C') est généré en utilisant un paramètre affecté au processus d'utilisation en cours et/ou au terminal de service (10).

9. Procédé selon l'une quelconque des revendications précédentes,
**caractérisé en ce que**
le code (C, C') est généré en utilisant un paramètre affecté à l'utilisateur et/ou au terminal (1).

10. Procédé selon l'une quelconque des revendications 4 à 9,
**caractérisé en ce que**
le signal d'invocation (AS) contient le paramètre affecté à l'utilisateur et/ou au terminal (1) et/ou au processus d'utilisation en cours et/ou au terminal de service (10).

11. Procédé selon l'une quelconque des revendications précédentes,
**caractérisé en ce que**
le code (C) est transmis directement du terminal (1) vers le terminal de service (10), par l'intermédiaire d'une interface (5, 11).

12. Procédé selon l'une quelconque des revendications précédentes,
**caractérisé en ce que**
le code (C) est transmis au terminal de service (10), en utilisant un d'écran (3) du terminal (1).

13. Procédé selon la revendication 12,
**caractérisé en ce que**
le code (C) est lu par un lecteur (18) du terminal de service (10), à partir de l'écran (3) du terminal (1).

14. Terminal (1) pour la réalisation d'un procédé selon l'une quelconque des revendications 1 à 13,
avec un dispositif de génération de code (4)
et/ou avec un dispositif de génération d'un signal d'invocation (AS), pour demander un code (C) pour le terminal (1) et avec des moyens d'envoi du signal d'invocation (AS) à un dispositif de génération de code (7) et avec des moyens de réception de code à partir du dispositif de génération de code (7) et avec un système (3, 5) de transmission d'un code (C) à un terminal de service (10),
**caractérisé en ce que**
le dispositif de génération de code génère respectivement le code (C), soit totalement ou partiellement au cours d'un procédé récursif, en utilisant le code ayant servi lors de l'utilisation précédente.

15. Terminal selon la revendication 14,
**caractérisé en ce que**
le terminal (1) est un téléphone mobile.

16. Terminal de service (10) pour la réalisation d'un procédé selon l'une quelconque des revendications 1 à 13,
avec un dispositif interne ou externe de génération de code (7), qui génère un code (C') pour le terminal de service (10)
et avec un dispositif de saisie d'un code (C) d'un terminal (1) de l'utilisateur
et avec un dispositif de vérification du code saisi (C) sur le terminal (1), en utilisant le code (C') généré par le dispositif de génération de code (7),
**caractérisé en ce que**
le dispositif de génération de code génère respectivement le code (C), soit totalement ou partiellement au cours d'un procédé récursif, en utilisant le code ayant servi lors de l'utilisation précédente.

17. Terminal de service selon la revendication 16,
**caractérisé en ce que**
le dispositif de saisie du code (C) comprend d'une interface (11) pour la transmission directe du code (C), du terminal (1) vers le terminal de service (10).

18. Terminal de service selon l'une quelconque des revendications 16 ou 17,
**caractérisé en ce que**
le dispositif de saisie du code (C) comprend un lecteur (18) destiné à lire le code (C) sur l'écran (3) du terminal (1 ).

19. Système pour la réalisation d'un procédé selon l'une quelconque des revendications 1 à 13, avec un terminal (1) selon la revendication 14 ou 15 et un terminal de service (10), selon la revendication 16, 17 ou 18.
